# EUROPEAN PATENT SPECIFICATION

(11) **EP 4 579 101 B1**
(45) Date of publication and mention of the grant of the patent: **13.05.2026**
(21) Application number: 24842010.1
(22) Date of filing: 25.04.2024
(51) Int. Cl.: F16H 3/091

(54) **LONGITUDINAL TWO-GEAR ELECTRIC DRIVE ASSEMBLY AND NEW ENERGY VEHICLE**
ELEKTRISCHE ANTRIEBSANORDNUNG MIT ZWEI GÄNGEN IN LÄNGSRICHTUNG UND FAHRZEUG MIT NEUER ENERGIE
ENSEMBLE D'ENTRAÎNEMENT ÉLECTRIQUE À DEUX ENGRENAGES LONGITUDINAUX ET VÉHICULE À ÉNERGIE NOUVELLE

(30) Priority: 18.07.2023 CN 202321892957 U
(43) Date of publication of application: 02.07.2025
(73) Proprietor: Jing-Jin Electric Technologies Co., Ltd, Beijing 100023 (CN)
(72) Inventor: YU, Ping, Beijing 100023 (CN); LI, Jianwen, Beijing 100023 (CN); YANG, Changqi, Beijing 100023 (CN); ZHAO, Hongchao, Beijing 100023 (CN); LIU, Huaijin, Beijing 100023 (CN); XU, Qiang, Beijing 100023 (CN)
(74) Representative: Keil & Schaafhausen Patentanwälte PartGmbB
(86) International application number: PCT/CN2024/089788
(87) International publication number: WO 2025/016010

(56) References cited:
- WO-A2-2022/116787
- CN-A- 108 422 849
- CN-A- 108 422 849
- CN-A- 114 183 506
- CN-A- 116 278 690
- CN-U- 201 714 925
- CN-U- 205 423 703
- CN-U- 206 277 947
- CN-U- 206 277 947
- CN-U- 215 334 224
- CN-U- 220 378 803
- DE-A1- 102018 119 488
- US-A1- 2022 032 755

## Description

### TECHNICAL FIELD

The present invention belongs to the technical field of new energy vehicles, and specifically relates to a longitudinal two-speed electric drive assembly and a new energy vehicle.

### BACKGROUND

The drive assembly of a new energy vehicle is generally composed of a motor and a reducer. The motor first converts electrical energy into mechanical energy to provide power for the vehicle, and then reduces the motor speed by the reducer while amplifying the output torque of the motor, thereby achieving the effect of decreasing the speed and increasing the torque, so that the drive assembly can operate within a certain rotational speed range and under a certain driving torque.

At present, the drive assemblies in new energy vehicles mostly use motor direct drive or two-stage reduction drive, so that the vehicle can only achieve direct drive or power output with one reduction ratio when driving on different road sections (such as flat roads and uphill), and the high-speed condition and high-torque hill-climbing condition cannot be satisfied at the same time. If a high-power motor is used to achieve high speed and high torque output, the production cost of the drive assembly will increase, and there will also be NVH (Noise, Vibration, Harshness) problems.

Document CN 108 422 849 A, according to its abstract, discloses a longitudinal dual power source vehicle drive assembly comprising: an automatic transmission, a first power source and a second power source, a transmission input shaft and a transmission output shaft of the automatic transmission share the same axial line, the transmission input shaft is connected with an output shaft of the first power source, the transmission output shaft is connected with an input shaft of the second power source, an output shaft of the second power source is connected with an axle half shaft, and the automatic transmission has two speed ratio transmission types.

Document CN 205 423 703 U, according to its abstract, discloses an automatic transmission including a bi -polar face tooth combination fluted disc and the dead axle train that the two -stage is slowed down. The shifter of derailleur is bi -polar face tooth combination fluted disc, has bi -polar face tooth: left end face tooth and right -hand member face tooth. Through the axial displacement on the derailleur output shaft who realizes bi -polar face tooth combination fluted disc, its left end face tooth and right -hand member face tooth respectively with the meshing of terminal surface tooth, realize second gear and one grade of gear, when it is not meshing with either, the transmission is in neutral position, the derailleur is at the neutral position. Integrative structure is independently perhaps assembled respectively become with right -hand member face tooth to left end face tooth.

Document CN 114 183 506 A, according to its abstract, discloses a vehicle transmission, a vehicle power system and a vehicle. The transmission comprises a first gear, a second gear and a third gear, an input shaft and an output shaft are coaxially arranged, an intermediate shaft is parallel to the input shaft and is in transmission connection with the input shaft, and a normally-meshed driving gear is fixed on the input shaft; the first-gear driven gear is rotationally assembled on the output shaft; the first-gear and third-gear synchronizer comprises a first gear hub fixed to the output shaft and a first combination sleeve assembled on the first gear hub in a sliding mode, the first combination sleeve is a gear sleeve with teeth on the outer ring, and a second-gear driven gear is integrated on the first combination sleeve. The normally-meshed driven gear and the first-gear driving gear are fixedly assembled on the intermediate shaft, and the second-gear driving gear is rotationally assembled on the intermediate shaft; the second-gear synchronizer comprises a second gear hub fixed to the middle shaft and a second combination sleeve assembled on the second gear hub in a sliding mode. A second-gear driven gear is integrated on the first combination sleeve.

### SUMMARY

In view of the above problems, the present invention discloses a longitudinal two-speed electric drive assembly and a new energy vehicle to overcome or at least partially solve the above problems.

In order to achieve the above object, the present invention adopts the following technical solutions.

According to the invention, a longitudinal two-speed electric drive assembly is provided.

The longitudinal two-speed electric drive assembly comprises a drive motor, a power take-off mechanism and a transmission mechanism;
the transmission mechanism comprises an input shaft, an intermediate shaft and an output shaft, the input shaft is connected to the drive motor for transmission, the output shaft and the input shaft are coaxially arranged and connected for transmission via a first clutch, the intermediate shaft and the output shaft are arranged in parallel, the input shaft is fixedly provided thereon with a first gear, the intermediate shaft is provided thereon with a second gear and a third gear, the second gear is fixedly connected to the intermediate shaft,
the third gear and the intermediate shaft are connected for transmission via a second clutch, the output shaft is provided thereon with a fourth gear, the first gear and the second gear are meshed for transmission, and the third gear and the fourth gear are meshed for transmission;
the first clutch and the second clutch are both electromagnetic tooth clutches.

Further, the input shaft and the output shaft may be connected via a bearing.

Further, the output shaft may be provided thereon with a first output flange.

Further, the first clutch may comprise
a first fixed face gear and a first movable face gear; the first fixed face gear may be fixedly connected to the input shaft, and the first movable face gear may be connected to the output shaft via a spline.

Further, the second clutch may comprise a second fixed face gear and a second movable face gear; the second fixed face gear may be fixedly connected to the third gear, and the second movable face gear may be connected to the intermediate shaft via a spline.

Further according to the invention, the longitudinal two-speed electric drive assembly further comprises a power take-off mechanism connected to the intermediate shaft via a third clutch to draw power of the drive motor.

Still further according to the invention, the power take-off mechanism comprises a power take-off input shaft and a power take-off output shaft;
the power take-off input shaft and the intermediate shaft are arranged coaxially and connected for transmission via the third clutch, the power take-off output shaft and the power take-off input shaft are arranged in parallel, the power take-off input shaft is provided thereon with a fifth gear, the power take-off output shaft is provided thereon with a sixth gear, and the fifth gear and the sixth gear are meshed for transmission.

Further, the power take-off output shaft may be provided thereon with a second output flange.

Further, the rotor shaft of the drive motor and the input shaft may be an integrated structure.

Another aspect of the present invention provides a new energy vehicle, which uses the longitudinal two-speed drive assembly as described above.

The advantages and beneficial effects of the present invention are as follows.

In the longitudinal two-speed electric drive assembly of the present invention, by providing the intermediate shaft parallel to the input shaft and the output shaft coaxially arranged with the input shaft, the longitudinal two-speed electric drive assembly can not only realize high-speed motor direct drive, but also reduce speed and increase torque to achieve high torque output, meet the needs of various working conditions, and enable the vehicle to work efficiently under various working conditions. The longitudinal two-speed electric drive assembly has advantages such as compact structure, high transmission efficiency, good NVH performance and low production cost. In addition, the longitudinal two-speed electric drive assembly uses an electromagnetic tooth clutch, which makes the gear shifting smoother, the gear shifting response faster, and the transmission more stable.

### BRIEF DESCRIPTION OF DRAWINGS

By reading the detailed description of the preferred embodiments below, various other advantages and benefits will become clear to a person of ordinary skill in the art. The accompanying drawings are only used for the purpose of illustrating the preferred embodiments, and should not be considered as a limitation to the present invention. Moreover, throughout the drawings, the same reference numerals are used to denote the same components. In the drawings:
FIG. 1 is a schematic view of the structure of a longitudinal two-speed electric drive assembly in an embodiment of the present invention;
FIG. 2 is a torque-speed characteristic curve of the output of the longitudinal two-speed electric drive assembly in an embodiment of the present invention; and
FIG. 3 is a torque-vehicle speed coverage of a new energy vehicle in an embodiment of the present invention.

In the drawings: 1, drive motor; 2, input shaft; 3, intermediate shaft; 4, output shaft; 5, first clutch; 5-1, first fixed face gear; 5-2, first movable face gear; 6, first gear; 7, second gear; 8, third gear; 9, second clutch; 9-1, second fixed face gear; 9-2, second movable face gear; 10, fourth gear; 11, bearing; 12, first output flange; 13, power take-off input shaft; 14, power take-off output shaft; 15, fifth gear; 16, sixth gear; 17, second output flange; 18, third clutch.

### DETAILED DESCRIPTION

In order to make the object, technical solutions, and advantages of the present invention clearer, the present invention will be described clearly and completely in conjunction with the specific embodiments and corresponding drawings. Obviously, the embodiments described are only part of rather than all of the embodiments of the present invention. Based on the embodiments in the present invention, all other embodiments obtained by those of ordinary skill in the art without paying creative work shall fall within the protection scope of the present invention as defined in the appended claims.

The technical solutions provided by various embodiments of the present invention will be described in detail with reference to the accompanying drawings.

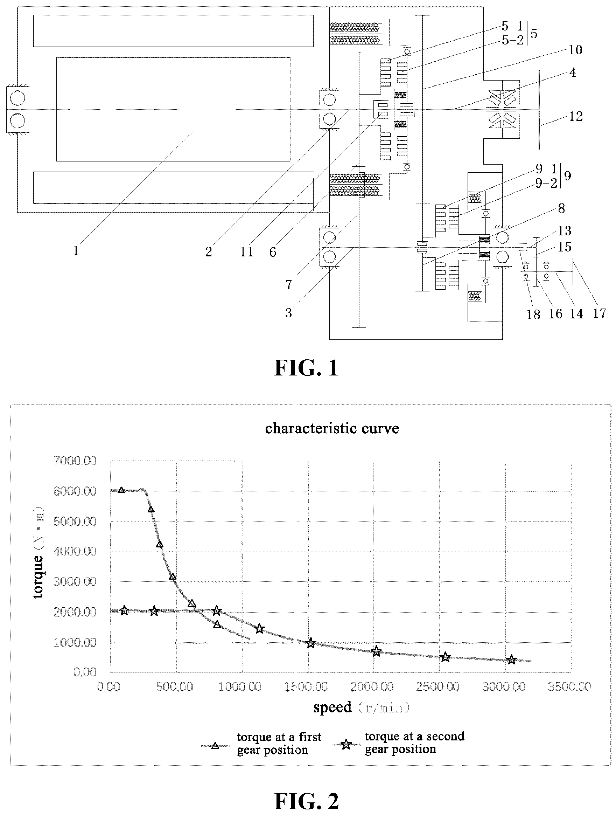

A longitudinal two-speed electric drive assembly is disclosed in an embodiment of the present invention. As shown in FIG. 1, the longitudinal two-speed electric drive assembly comprises a drive motor 1 and a transmission mechanism.

Specifically, the transmission mechanism comprises an input shaft 2, an intermediate shaft 3 and an output shaft 4. The input shaft 2 is connected to the drive motor 1 for transmission. The output shaft 4 and the input shaft 2 are coaxially arranged, and connected for transmission via a first clutch 5. The intermediate shaft 3 and the output shaft 4 are arranged in parallel. The input shaft 2 is provided thereon with a first gear 6. The intermediate shaft 3 is provided thereon with a second gear 7 and a third gear 8. The third gear 8 and the intermediate shaft 3 are connected for transmission via a second clutch 9. The output shaft 4 is provided thereon with a fourth gear 10. The first gear 6 and the second gear 7 are meshed for transmission. The third gear 8 and the fourth gear 10 are meshed for transmission.

The first clutch 5 and the second clutch 9 are both electromagnetic tooth clutches. The electromagnetic tooth clutch can transmit a torque greater than 2000 N·m in a limited space, and can withstand the impact of speed difference due to inaccurate synchronization, reduce the speed synchronization requirements during the speed change process, and save the speed regulation time under the conditions of large speed ratio difference and large speed regulation range.

The specific working process of the longitudinal two-speed electric drive assembly in this embodiment is as follows.

The implementation process at the first gear position (low-speed gear) is as follows. The first clutch 5 is controlled to disengage, and the second clutch 9 is controlled to engage. At this point, the power generated by the drive motor 1 is transmitted to the first gear 6 via the input shaft 2. The first gear 6 and the second gear 7 are meshed to transmit the power to the intermediate shaft 3, thereby realizing a first-stage speed reduction. Then, the intermediate shaft 3 drives the third gear 8 to rotate via the second clutch 9, and the third gear 8 and the fourth gear 10 are meshed to transmit the power to the output shaft 4, thereby realizing a second-stage speed reduction. Thus, the longitudinal two-speed electric drive assembly can output high-torque and low-speed driving force for the starting or hill-climbing conditions of the vehicle.

The implementation process at the second gear position (high-speed gear) is as follows. The first clutch 5 is controlled to engage, and the second clutch 9 is controlled to disengage. At this point, the power generated by the drive motor 1 is transmitted to the input shaft 2, and the input shaft 2 drives the output shaft 4 to rotate via the first clutch 5, thereby realizing direct drive of the drive motor 1, providing a high-speed and low-torque driving force for the vehicle, and meeting the normal driving needs of the vehicle.

As can be seen from FIG. 2, the longitudinal two-speed electric drive assembly of this embodiment can output power with large torque and low speed at a first gear position, and achieve power output with small torque and high speed at a second gear position.

In sum, in the longitudinal two-speed electric drive assembly of this embodiment, by providing the intermediate shaft parallel to the input shaft and the output shaft coaxially arranged with the input shaft, the longitudinal two-speed electric drive assembly can not only realize high-speed motor direct drive, but also reduce speed and increase torque to achieve high torque output, meet the needs of various working conditions, and enable the vehicle to work efficiently under various working conditions. The longitudinal two-speed electric drive assembly has advantages such as compact structure, high transmission efficiency, good NVH performance and low production cost. In addition, the longitudinal two-speed electric drive assembly uses an electromagnetic tooth clutch, which makes the gear shifting smoother, the gear shifting response faster, and the transmission more stable.

In this embodiment, as shown in FIG. 1, the input shaft 2 and the output shaft 4 are connected by a bearing 11, so that the input shaft 2 and the output shaft 4 are better coaxial and the rotation is more stable.

Moreover, the output shaft 4 is provided thereon with a first output flange 12. In this way, the longitudinal two-speed electric drive assembly can transmit power to the axle drive shaft via the first output flange 12, thereby providing a driving force for the vehicle.

In addition, the first clutch 5 comprises a first fixed face gear 5-1 and a first movable face gear 5-2.

The first fixed face gear 5-1 is fixedly connected to the input shaft 2, and the first movable face gear 5-2 is connected to the output shaft 4 via a spline. In this way, when the first fixed face gear 5-1 and the first movable face gear 5-2 are engaged, the input shaft 2 can drive the output shaft 4 to rotate and transmit power to the output shaft 4.

Further, the second clutch 9 comprises a second fixed face gear 9-1 and a second movable face gear 9-2.

The second fixed face gear 9-1 is fixedly connected to the third gear 8, and the second movable face gear 9-2 is connected to the intermediate shaft 3 via a spline. In this way, when the second fixed face gear 9-1 and the second movable face gear 9-2 are meshed, the intermediate shaft 3 can drive the third gear 8 to rotate and transmit power to the third gear 8.

In this embodiment, as shown in FIG. 1, the longitudinal two-speed electric drive assembly also comprises a power take-off mechanism.

The power take-off mechanism is connected to the intermediate shaft 3 for transmission via the third clutch 18, and is used to draw the power of the drive motor and transmit it to other systems of the vehicle that need power, such as the mixing system of the mixer truck, the cleaning system of the automatic sweeper, etc.

It should be noted that, since the first gear 6 is fixedly connected to the input shaft 2, the second gear 7 is fixedly connected to the intermediate shaft 3, and the first gear 6 and the second gear 7 are connected for transmission, when the drive motor 1 rotates, no matter whether the longitudinal two-speed electric drive assembly is at the first gear position or the second gear position, or at the neutral gear position, the drive motor 1 will drive the intermediate shaft 3 to rotate. In this way, the intermediate shaft 3 can draw the power via the power take-off mechanism, and the output of the power take-off mechanism will not affect the normal driving force output of the longitudinal two-speed electric drive assembly.

Specifically, the power take-off mechanism comprises a power take-off input shaft 13 and a power take-off output shaft 14, and the power is output via the power take-off output shaft 14.

The power take-off input shaft 13 and the intermediate shaft 3 are coaxially arranged, and are connected for transmission via the third clutch 18. The third clutch 18 can be used to control on/off of the power transmission between the power take-off mechanism and the intermediate shaft 3. That is, when the power take-off mechanism does not need power, the power transmission can be cut off by controlling the third clutch 18 to disengage. The power take-off output shaft 14 and the power take-off input shaft 13 are arranged in parallel, and the power take-off input shaft 13 is provided thereon with a fifth gear 15, the power take-off output shaft 14 is provided thereon with a sixth gear 16, and the fifth gear 15 and the sixth gear 16 are meshed for transmission. In this way, when the third clutch 18 is engaged, the intermediate shaft 3 will drive the power take-off input shaft 13 to rotate via the third clutch 18, the power take-off input shaft 13 will drive the fifth gear 15 to rotate, and the fifth gear 15 and the sixth gear 16 will be meshed to deliver the power to the power take-off output shaft 14, thereby realizing the power output of the power take-off mechanism.

Further, the power take-off output shaft 14 is provided thereon with a second output flange 17, and the power take-off mechanism can transmit power to other systems of the vehicle that need power via the second output flange 17.

In addition, the rotor shaft of the drive motor and the input shaft of the transmission mechanism are an integrated structure, so that when power is transmitted, the impact of the rotor shaft of the drive motor on the transmission mechanism can be reduced, and the transmission loss can be reduced. In other embodiments of the present invention, alternatively, the rotor shaft of the drive motor may be connected to the input shaft of the transmission mechanism via a coupling.

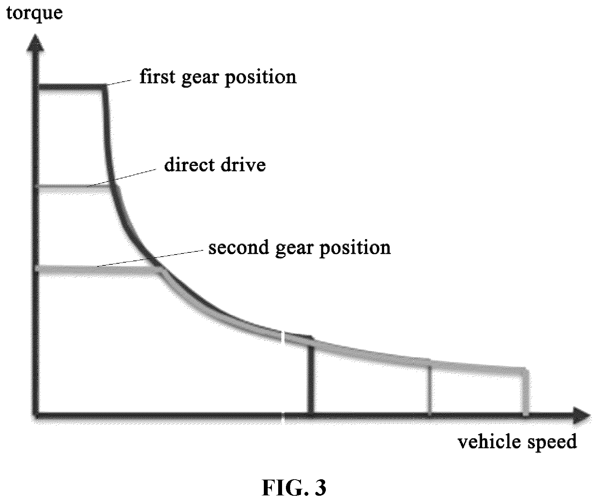

In another embodiment of the present invention, a new energy vehicle is disclosed, which uses the longitudinal two-speed electric drive assembly in the above embodiment. As shown in FIG. 3, the torque-vehicle speed coverage of the new energy vehicle at the first and second gear positions is wider than the coverage of the traditional direct drive, and can meet the needs of different working conditions.

## Claims

1. A longitudinal two-speed electric drive assembly, comprising:
a drive motor (1), a power take-off mechanism and a transmission mechanism;
wherein the transmission mechanism comprises an input shaft (2), an intermediate shaft (3) and an output shaft (4), the input shaft (2) is connected to the drive motor (1) for transmission, the output shaft (4) and the input shaft (2) are coaxially arranged and connected for transmission via a first clutch (5), the intermediate shaft (3) and the output shaft (4) are arranged in parallel, the input shaft (2) is fixedly provided thereon with a first gear (6), the intermediate shaft (3) is provided thereon with a second gear (7) and a third gear (8), the second gear (7) is fixedly connected to the intermediate shaft (3), the third gear (8) and the intermediate shaft (3) are connected for transmission via a second clutch (9), the output shaft (4) is provided thereon with a fourth gear (10), the first gear (6) and the second gear (7) are meshed for transmission, and the third gear (8) and the fourth gear (10) are meshed for transmission;
the power take-off mechanism connected to the intermediate shaft (3) for transmission via a third clutch (18) to draw power of the drive motor (1),
the power take-off mechanism comprises a power take-off input shaft (13) and a power take-off output shaft (14);
the power take-off input shaft (13) and the intermediate shaft (3) are arranged coaxially and connected for transmission via the third clutch (18), the power take-off output shaft (14) and the power take-off input shaft (13) are arranged in parallel, the power take-off input shaft (13) is provided thereon with a fifth gear (15), the power take-off output shaft (14) is provided thereon with a sixth gear (16), and the fifth gear (15) and the sixth gear (16) are meshed for transmission,
wherein the first clutch (5) and the second clutch (9) are both electromagnetic tooth clutches.

2. The longitudinal two-speed electric drive assembly according to claim 1, **characterized in that**: the input shaft (2) and the output shaft (4) are connected via a bearing (11).

3. The longitudinal two-speed electric drive assembly according to claim 1, **characterized in that**: the output shaft (4) is provided thereon with a first output flange (12).

4. The longitudinal two-speed electric drive assembly according to claim 1, **characterized in that**: the first clutch (5) comprises a first fixed face gear (5-1) and a first movable face gear (5-2);
the first fixed face gear (5-1) is fixedly connected to the input shaft (2), and the first movable face gear (5-2) is connected to the output shaft (4) via a spline.

5. The longitudinal two-speed electric drive assembly according to claim 1, **characterized in that**: the second clutch (9) comprises a second fixed face gear (9-1) and a second movable face gear (9-2);
the second fixed face gear (9-1) is fixedly connected to the third gear (8), and the second movable face gear (9-2) is connected to the intermediate shaft (3) via a spline.

6. The longitudinal two-speed electric drive assembly according to claim 1, **characterized in that**: the power take-off output shaft (14) is provided thereon with a second output flange (17).

7. The longitudinal two-speed electric drive assembly according to any one of claims 1 to 6, **characterized in that**: the rotor shaft of the drive motor (1) and the input shaft (2) are an integrated structure.

8. A new energy vehicle using the longitudinal two-speed electric drive assembly according to any one of claims 1 to 7.

## Patentansprüche

1. Längsgerichtete elektrische Antriebsanordnung mit zwei Gängen, bestehend aus:
einem Antriebsmotor (1), einem Kraftabnahmemechanismus und einem Getriebemechanismus;
wobei der Getriebemechanismus eine Eingangswelle (2), eine Zwischenwelle (3) und eine Ausgangswelle (4) umfasst, die Eingangswelle (2) zur Kraftübertragung mit dem Antriebsmotor (1) verbunden ist, die Ausgangswelle (4) und die Eingangswelle (2) koaxial angeordnet und zur Kraftübertragung über eine erste Kupplung (5) verbunden sind, die Zwischenwelle (3) und die Abtriebswelle (4) parallel angeordnet sind, die Antriebswelle (2) fest mit einem ersten Zahnrad (6) versehen ist, die Zwischenwelle (3) mit einem zweiten Zahnrad (7) und einem dritten Zahnrad (8) versehen ist, das zweite Zahnrad (7) fest mit der Zwischenwelle (3) verbunden ist, das dritte Zahnrad (8) und die Zwischenwelle (3) über eine zweite Kupplung (9) zur Kraftübertragung verbunden sind, die Ausgangswelle (4) mit einem vierten Zahnrad (10) versehen ist, das erste Zahnrad (6) und das zweite Zahnrad (7) zur Kraftübertragung in Eingriff stehen, und das dritte Zahnrad (8) und das vierte Zahnrad (10) zur Kraftübertragung in Eingriff stehen;
der Kraftabnahmemechanismus über eine dritte Kupplung (18) mit der Zwischenwelle (3) zur Kraftübertragung verbunden ist, um die Kraft des Antriebsmotors (1) abzuziehen,
der Kraftabnahmemechanismus eine Kraftabnahme-Eingangswelle (13) und eine Kraftabnahme-Ausgangswelle (14) umfasst;
die Kraftabnahme-Eingangswelle (13) und die Zwischenwelle (3) koaxial angeordnet und über die dritte Kupplung (18) zur Kraftübertragung verbunden sind, die Kraftabnahme-Ausgangswelle (14) und die Kraftabnahme-Eingangswelle (13) parallel angeordnet sind, die Kraftabnahme-Eingangswelle (13) mit einem fünften Zahnrad (15) versehen ist, die Kraftabnahme-Ausgangswelle (14) mit einem sechsten Zahnrad (16) versehen ist, und das fünfte Zahnrad (15) und das sechste Zahnrad (16) zur Kraftübertragung miteinander kämmend sind,
wobei die erste Kupplung (5) und die zweite Kupplung (9) beide elektromagnetische Zahnkupplungen sind.

2. Längsgerichtete elektrische Antriebsanordnung mit zwei Gängen nach Anspruch 1, **dadurch gekennzeichnet, dass**: die Eingangswelle (2) und die Ausgangswelle (4) über ein Lager (11) verbunden sind.

3. Längsgerichtete elektrische Antriebsanordnung mit zwei Gängen nach Anspruch 1, **dadurch gekennzeichnet, dass**: die Abtriebswelle (4) mit einem ersten Abtriebsflansch (12) versehen ist.

4. Längsgerichtete elektrische Antriebsanordnung mit zwei Gängen nach Anspruch 1, **dadurch gekennzeichnet, dass**: die erste Kupplung (5) ein erstes feststehendes Stirnrad (5-1) und ein erstes bewegliches Stirnrad (5-2) umfasst;
das erste feststehende Stirnrad (5-1) fest mit der Eingangswelle (2) verbunden ist und das erste bewegliche Stirnrad (5-2) über eine Keilverzahnung mit der Ausgangswelle (4) verbunden ist.

5. Längsgerichtete elektrische Antriebsanordnung mit zwei Gängen nach Anspruch 1, **dadurch gekennzeichnet, dass**: die zweite Kupplung (9) ein zweites feststehendes Stirnrad (9-1) und ein zweites bewegliches Stirnrad (9-2) umfasst;
das zweite feststehende Stirnrad (9-1) fest mit dem dritten Zahnrad (8) verbunden ist und das zweite bewegliche Stirnrad (9-2) über eine Keilverzahnung mit der Zwischenwelle (3) verbunden ist.

6. Längsgerichtete elektrische Antriebsanordnung mit zwei Gängen nach Anspruch 1, **dadurch gekennzeichnet, dass**: die Kraftabnahme-Ausgangswelle (14) mit einem zweiten Abtriebsflansch (17) versehen ist.

7. Längsgerichtete elektrische Antriebsanordnung mit zwei Gängen nach einem der Ansprüche 1 bis 6, **dadurch gekennzeichnet, dass**: die Rotorwelle des Antriebsmotors (1) und die Eingangswelle (2) eine integrierte Struktur bilden.

8. Fahrzeug mit neuer Energie, das die längsgerichtete elektrische Antriebsanordnung mit zwei Gängen nach einem der Ansprüche 1 bis 7 verwendet.

## Revendications

1. Ensemble d'entraînement électrique longitudinal à deux rapports, comprenant :
un moteur d'entraînement (1), un mécanisme de prise de force et un mécanisme de transmission ;
dans lequel le mécanisme de transmission comprend un arbre d'entrée (2), un arbre intermédiaire (3) et un arbre de sortie (4), l'arbre d'entrée (2) est connecté au moteur d'entraînement (1) pour la transmission, l'arbre de sortie (4) et l'arbre d'entrée (2) sont agencés coaxialement et connectés pour la transmission via un premier embrayage (5), l'arbre intermédiaire (3) et l'arbre de sortie (4) sont agencés en parallèle, l'arbre d'entrée (2) est pourvu de manière fixe d'un premier engrenage (6), l'arbre intermédiaire (3) est pourvu d'un deuxième engrenage (7) et d'un troisième engrenage (8), le deuxième engrenage (7) est connecté de manière fixe à l'arbre intermédiaire (3), le troisième engrenage (8) et l'arbre intermédiaire (3) sont connectés pour la transmission via un deuxième embrayage (9), l'arbre de sortie (4) est pourvu d'un quatrième engrenage (10), le premier engrenage (6) et le deuxième engrenage (7) sont engrenés pour la transmission, et le troisième engrenage (8) et le quatrième engrenage (10) sont engrenés pour la transmission ;
dans lequel le mécanisme de prise de force est connecté à l'arbre intermédiaire (3) pour la transmission via un troisième embrayage (18) afin de recevoir de la puissance du moteur d'entraînement (1) ;
dans lequel le mécanisme de prise de force comprend un arbre d'entrée de prise de force (13) et un arbre de sortie de prise de force (14) ;
dans lequel l'arbre d'entrée de la prise de force (13) et l'arbre intermédiaire (3) sont agencés coaxialement et connectés pour la transmission via le troisième embrayage (18), l'arbre de sortie de la prise de force (14) et l'arbre d'entrée de la prise de force (13) sont agencés en parallèle, l'arbre d'entrée de la prise de force (13) est pourvu d'un cinquième engrenage (15), l'arbre de sortie de la prise de force (14) est pourvu d'un sixième engrenage (16), et le cinquième engrenage (15) et le sixième engrenage (16) sont engrenés pour la transmission ;
dans lequel le premier embrayage (5) et le deuxième embrayage (9) sont tous deux des embrayages dentés électromagnétiques.

2. Ensemble d'entraînement électrique longitudinal à deux rapports selon la revendication 1, **caractérisé en ce que** :
l'arbre d'entrée (2) et l'arbre de sortie (4) sont connectés via un roulement (11).

3. Ensemble d'entraînement électrique longitudinal à deux rapports selon la revendication 1, **caractérisé en ce que** :
l'arbre de sortie (4) est pourvu d'une première bride de sortie (12).

4. Ensemble d'entraînement électrique longitudinal à deux rapports selon la revendication 1, **caractérisé en ce que** :
le premier embrayage (5) comprend un premier engrenage à face fixe (5-1) et un premier engrenage à face mobile (5-2) ;
le premier engrenage à face fixe (5-1) est connecté de manière fixe à l'arbre d'entrée (2), et le premier engrenage à face mobile (5-2) est connecté à l'arbre de sortie (4) via une cannelure.

5. Ensemble d'entraînement électrique longitudinal à deux rapports selon la revendication 1, **caractérisé en ce que** :
le deuxième embrayage (9) comprend un deuxième engrenage à face fixe (9-1) et un deuxième engrenage à face mobile (9-2) ;
le deuxième engrenage à face fixe (9-1) est connecté de manière fixe au troisième engrenage (8), et le deuxième engrenage à face mobile (9-2) est connecté à l'arbre intermédiaire (3) via une cannelure.

6. Ensemble d'entraînement électrique longitudinal à deux rapports selon la revendication 1, **caractérisé en ce que** :
l'arbre de sortie de prise de force (14) est pourvu d'une deuxième bride de sortie (17).

7. Ensemble d'entraînement électrique longitudinal à deux rapports selon l'une quelconque des revendications 1 à 6, **caractérisé en ce que** :
l'arbre de rotor du moteur d'entraînement (1) et l'arbre d'entrée (2) constituent une structure intégrée.

8. Véhicule à énergie nouvelle utilisant l'ensemble d'entraînement électrique longitudinal à deux rapports selon l'une quelconque des revendications 1 à 7.
